# EUROPÄISCHE PATENTSCHRIFT

(11) **EP 4 125 529 B1**
(45) Veröffentlichungstag und Bekanntmachung des Hinweises auf die Patenterteilung: **26.08.2026**
(21) Anmeldenummer: 21712102.9
(22) Anmeldetag: 11.03.2021
(51) Int. Cl.: A47L 15/42, D06F 39/12

(54) **HAUSHALTSGERÄT**
DOMESTIC APPLIANCE
APPAREIL MÉNAGER

(30) Priorität: 30.03.2020 DE 102020204086
(43) Veröffentlichungstag der Anmeldung: 08.02.2023
(73) Patentinhaber: BSH Hausgeräte GmbH, 81739 München (DE)
(72) Erfinder: SING, Alexander, 89426 Wittislingen (DE); BISGIN, Sami, 89407 Dillingen (DE); FICKLER, Michael, 86152 Augsburg (DE); HESSEL, Maximilian, 89231 Neu-Ulm (DE)
(86) Internationale Anmeldenummer: PCT/EP2021/056165
(87) Internationale Veröffentlichungsnummer: WO 2021/197791

(56) Entgegenhaltungen:
- EP-A1- 3 274 388
- DE-A1- 102008 030 539
- DE-A1- 102012 201 244
- JP-A- 2011 167 426
- US-A1- 2011 168 217
- US-A1- 2018 368 653

## Beschreibung

Die vorliegende Erfindung betrifft ein Haushaltsgerät, insbesondere ein wasserführendes Haushaltsgerät.

Bei Haushaltsgeschirrspülmaschinen gibt es Bereiche, welche vor einem unzulässigen Dampfaustritt beziehungsweise Wasseraustritt aus einem Spülbehälter der Haushaltsgeschirrspülmaschine heraus zu schützen sind. Hierzu können nach betriebsinternen Erkenntnissen der Anmelderin aus Gummi gefertigte Dichtungen eingesetzt werden. Ferner können auch Vliese, Kunststoffe oder Schaumteile eingesetzt werden, um den Dampfaustritt in kontrollierter Weise zu führen. Dies sind meist vorgefertigte Bauteile oder Montagegruppen, welche an die entsprechenden Stellen an dem Spülbehälter angebracht werden.

Die Druckschrift DE 10 2012 201 244 A1 offenbart eine Geschirrspülmaschine, insbesondere eine Haushaltsgeschirrspülmaschine, mit mindestens einer Gerätewand. Auf der Gerätewand ist ein Verbundbauteil, welches ein eine Basisfolie und eine viskoelastische Klebstoffschicht umfassendes Entdröhnelement ("constraint-layer") sowie eine an der der Gerätewand abgewandten Seite des Entdröhnelements angeordnete, insbesondere anliegende, äußere Isolationsschicht aufweist, mittels einer an der Basisfolie des Entdröhnelements unterseitig vorgesehenen, viskoelastischen Klebstoffschicht festgeklebt.

Die Druckschrift US 2018/0368653 A1 offenbart eine Schaumstoffplatte zur Verwendung in einem Geschirrbehandlungsgerät mit einer Tür, wobei die Schaumstoffplatte Bereiche unterschiedlicher Dichte umfasst, wobei die Schaumstoffplatte in bestimmten Bereichen nicht komprimierte und komprimierte Bereiche umfasst, um zumindest einige der Bereiche unterschiedlicher Dichte zu bilden, und umfassend zumindest eine mit der Schaumstoffplatte bereitgestellte Verdrahtungsbefestigung, und wobei die Verdrahtungsbefestigung zumindest eine in der Schaumstoffplatte ausgebildete Rippe umfasst.

Die Druckschrift EP 3 092 935 A1 offenbart eine Anordnung zur akustischen und thermischen Isolation eines Aufnahmebereichs eines wasserführenden Haushaltsgeräts. Die Anordnung umfasst ein erstes Isolationselement, welches dazu eingerichtet ist, einen Aufnahmebereich thermisch zu isolieren, und ein zweites Isolationselement, welches dazu eingerichtet ist, den Aufnahmebereich akustisch zu isolieren, wobei das erste Isolationselement zwischen dem Aufnahmebereich und dem zweiten Isolationselement angeordnet ist. Dabei ist das erste Isolationselement direkt an den Aufnahmebereich angeschäumt.

Vor diesem Hintergrund besteht eine Aufgabe der vorliegenden Erfindung darin, ein verbessertes Haushaltsgerät zur Verfügung zu stellen.

Demgemäß wird ein Haushaltsgerät, insbesondere ein wasserführendes Haushaltsgerät, vorgeschlagen. Das Haushaltsgerät umfasst einen Aufnahmebereich und ein an dem Aufnahmebereich angebrachtes Isolationselement zum akustischen und/oder thermischen Isolieren des Aufnahmebereichs, wobei das Isolationselement aus einem viskoelastischen Polyurethanschaum gefertigt ist, wobei der viskoelastische Polyurethanschaum hydrophil ist und wobei das Isolationselement derart gegen den Aufnahmebereich gepresst ist, dass das Isolationselement gegenüber dem Aufnahmebereich fluiddicht abgedichtet ist.

Hierdurch kann das Isolationselement eine Doppelfunktion, nämlich die akustische und/oder thermische Isolation des Aufnahmebereichs und das Verhindern eines unerwünschten Dampfaustritts zwischen dem Isolationselement und dem Aufnahmebereich erfüllen.

Das Haushaltsgerät kann eine Haushaltsgeschirrspülmaschine sein. Das Haushaltsgerät kann jedoch auch eine Haushaltswaschmaschine oder jedes andere beliebige Haushaltsgerät, wie beispielsweise ein Kühlschrank, ein Herd, ein Backofen oder dergleichen, sein. Der Aufnahmebereich ist insbesondere quaderförmig oder würfelförmig und umfasst einen Boden, eine dem Boden gegenüberliegend angeordnete Decke, zwei einander gegenüberliegend angeordnete Seitenwände, eine verschwenkbar an dem Aufnahmebereich angeschlagene Tür sowie eine der geschlossenen Tür gegenüberliegend angeordnete Rückwand. Der Aufnahmebereich kann insbesondere ein Spülbehälter zum Aufnehmen von Spülgut sein.

Das Isolationselement kann an dem Boden, an der Decke, an den Seitenwänden, an der Rückwand und/oder an der Tür vorgesehen sein. Hierzu können mehrere Isolationselemente vorgesehen sein. Das Isolationselement kann jedoch auch derart ausgebildet sein, dass dieses den Aufnahmebereich mit Ausnahme der Tür vollständig umhüllt. Alternativ kann das Isolationselement beispielsweise auch nur an den Seitenwänden, nur an der Rückwand und/oder nur an der Decke des Aufnahmebereichs angeordnet sein. Das Isolationselement ist insbesondere geeignet, Körperschall in Wärme umzuwandeln. Hierdurch werden die akustischen Isolationseigenschaften des Isolationselements erzielt. Das Isolationselement weist jedoch auch thermische Isolationseigenschaften oder thermische Dämmeigenschaften auf.

Der viskoelastische Polyurethanschaum umfasst vorzugsweise eine Vielzahl in einem Matrixmaterial ausgebildete Zellen, Poren oder Hohlräume. Die Poren sind vorzugsweise luftgefüllt. Die Poren sind vorzugsweise offenporig oder offenzellig. Das heißt, die Poren sind untereinander in Verbindung. In diesem Fall ist der viskoelastische Polyurethanschaum insbesondere schwammförmig, wodurch dieser besonders viel Feuchtigkeit aufnehmen kann. Die Poren können jedoch auch geschlossenporig oder geschlossenzellig sein. Der viskoelastische Polyurethanschaum wird durch das Vermischen und Aufschäumen von zumindest zwei Rohkomponenten, nämlich einem Polyol und einem Isocyanat, hergestellt. Die Rohkomponenten können auch ein Treibmittel umfassen. Durch eine Vermischung der Rohkomponenten in Kombination mit dem Treibmittel kann durch eine chemische Reaktion der Rohkomponenten miteinander der viskoelastische Polyurethanschaum hergestellt werden.

Unter "Viskoelastizität" ist vorliegend ein teilweise elastisches, teilweise viskoses Materialverhalten zu verstehen. Viskoelastische Stoffe vereinen also die Merkmale von Festkörpern und Flüssigkeiten in sich. Vorzugsweise wird das Isolationselement durch das Pressen desselben gegen den Aufnahmebereich elastisch verformt oder komprimiert. Durch eine Rückstellkraft des Isolationselements, welches dieses aus seinem verformten Zustand in einen unverformten Zustand bringen kann, wird dieses fest gegen den Aufnahmebereich gepresst. Das heißt, zwischen dem Isolationselement und dem Aufnahmebereich kann vorzugsweise kein Fluid, insbesondere keine Flüssigkeit, hindurchtreten.

"Hydrophil" bedeutet wasserliebend. Das heißt, der viskoelastische Polyurethanschaum nimmt Wasserdampf oder Wasser auf. Vorzugsweise ist der viskoelastische Polyurethanschaum offenzellig, so dass dieser eine möglichst große Menge an Wasser aufnehmen kann.

Gemäß einer Ausführungsform weist der viskoelastische Polyurethanschaum bei 40 °C und bei einer Frequenz von 100 bis 800 Hz einen Verlustfaktor von größer als 0,2, bevorzugt von größer als 0,35, weiter bevorzugt von größer als 0,5, auf.

Hierdurch wird eine gute Entdröhnung des Aufnahmebereichs beziehungsweise eine akustische Dämpfung von Schwingungen des Aufnahmebereichs erreicht. Unter dem "Verlustfaktor" ist vorliegend bei physikalischen Schwingungen unterschiedlicher Natur das Verhältnis des verlustbehafteten Imaginärteils zum verlustfreien Realteil einer komplexen Größe zu verstehen. Der Verlustfaktor kann mit Hilfe von in dem Matrixmaterial eingebetteten Partikeln auf den jeweiligen Anwendungsbereich, das heißt auf einen definierten Temperatur- und Frequenzbereich, angepasst werden.

Gemäß einer weiteren Ausführungsform weist der viskoelastische Polyurethanschaum eine Wärmeleitfähigkeit zwischen 20 und 80 mW(m*K), bevorzugt zwischen 40 und 60 mW(m*K), weiter bevorzugt zwischen 50 und 60 mW(m*K), auf.

Hierdurch ist gewährleistet, dass das Isolationselement gute thermische Isolationseigenschaften oder Dämmeigenschaften aufweist.

Gemäß einer weiteren Ausführungsform weist der viskoelastische Polyurethanschaum eine Dichte von weniger als 300 kg/m³, bevorzugt von weniger 250 kg/m³, weiter bevorzugt von weniger als 200 kg/m³, auf.

Die Dichte des viskoelastischen Polyurethanschaums kann jedoch beliebig gewählt werden. Je geringer die Dichte, desto geringer ist der Anteil an Matrixmaterial und desto größer ist der Anteil an in dem Matrixmaterial eingebetteten Poren.

Gemäß einer weiteren Ausführungsform weist das Isolationselement eine elastisch verformbare Dichtlippe auf, welche gegen den Aufnahmebereich gepresst ist, um das Isolationselement gegenüber dem Aufnahmebereich fluiddicht abzudichten.

Das Isolationselement kann eine beliebige Anzahl an Dichtlippen umfassen. Vorzugsweise ist die Dichtlippe aus dem viskoelastischen Polyurethanschaum geformt. Bei dem Pressen des Isolationselements gegen den Aufnahmebereich verformt sich die Dichtlippe elastisch und drückt gegen den Aufnahmebereich. Hierdurch kann auch bei einem Schrumpfen des viskoelastischen Polyurethanschaums die fluiddichte Abdichtung über die gesamte Lebensdauer des Haushaltsgeräts aufrechterhalten werden.

Gemäß einer weiteren Ausführungsform nimmt der viskoelastische Polyurethanschaum während eines Programmablaufs des Haushaltsgeräts Wasser auf und gibt das Wasser gegen Ende des Programmablaufs wieder ab.

Der Programmablauf kann beispielsweise ein Spülprogramm einer Haushaltsgeschirrspülmaschine sein. Der viskoelastische Polyurethanschaum kann das Wasser beispielsweise dadurch abgeben, dass in den viskoelastischen Polyurethanschaum Wärme eingebracht wird. Der viskoelastische Polyurethanschaum gibt auch Wasser in Form von Luftfeuchtigkeit an die Umgebung ab, wenn dieser nass und die Luft in der Umgebung trocken ist. Der viskoelastische Polyurethanschaum steht im Gleichgewicht zur Umgebungsfeuchtigkeit.

Gemäß einer weiteren Ausführungsform sind in den viskoelastischen Polyurethanschaum Partikel eingebettet.

Die Partikel weisen vorzugsweise eine größere Dichte als der viskoelastische Polyurethanschaum selbst auf. Hierdurch wirken die Partikel als Massepunkte in dem viskoelastischen Polyurethanschaum. Mit Hilfe der Partikel kann der Verlustfaktor des viskoelastischen Polyurethanschaums in weiten Bereichen angepasst und optimiert werden.

Gemäß einer weiteren Ausführungsform sind in dem Isolationselement Bauteile des Haushaltsgeräts angeordnet.

Die Bauteile können beispielsweise Lüfter, Kabel, eine Wassertasche oder dergleichen aufweisen. Vorzugsweise sind die Bauteile vollständig oder zumindest abschnittsweise von dem viskoelastischen Polyurethanschaum umgeben. Hierdurch kann weiterhin auf zusätzliche Befestigungselemente zum Befestigen oder Montieren der Bauteile verzichtet werden. Die Bauteile können aktive Bauteile, wie beispielsweise Lüfter, oder passive Bauteile, wie beispielsweise Kabel, sein.

Gemäß einer weiteren Ausführungsform dämpft der viskoelastische Polyurethanschaum von den Bauteilen erzeugte Schwingungen.

Hierdurch kann der viskoelastische Polyurethanschaum auch die Funktion einer Schwingungsdämpfung beziehungsweise einer Aufhängung der Bauteile gewährleisten.

Weitere mögliche Implementierungen des Haushaltsgeräts umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Haushaltsgeräts hinzufügen.

Weitere vorteilhafte Ausgestaltungen und Aspekte des Haushaltsgeräts sind Gegenstand der Unteransprüche sowie der im Folgenden beschriebenen Ausführungsbeispiele des Haushaltsgeräts. Im Weiteren wird das Haushaltsgerät anhand von bevorzugten Ausführungsformen unter Bezugnahme auf die beigelegten Figuren näher erläutert.

Es zeigen
- Fig. 1: eine schematische perspektivische Ansicht einer Ausführungsform eines Haushaltsgeräts;
- Fig. 2: eine stark vergrößerte schematische Schnittansicht einer Ausführungsform eines Aufnahmebereichs für das Haushaltsgerät gemäß Fig. 1;
- Fig. 3: eine stark vergrößerte schematische Schnittansicht einer weiteren Ausführungsform eines Aufnahmebereichs für das Haushaltsgerät gemäß Fig. 1;
- Fig. 4: eine weitere stark vergrößerte schematische Schnittansicht des Aufnahmebereichs gemäß Fig. 2;
- Fig. 5: eine stark vergrößerte schematische Schnittansicht einer weiteren Ausführungsform eines Aufnahmebereichs für das Haushaltsgerät gemäß Fig. 1;
- Fig. 6: eine weitere stark vergrößerte schematische Schnittansicht des Aufnahmebereichs gemäß Fig. 5;
- Fig. 7: eine schematische Schnittansicht einer Ausführungsform einer Form zum Herstellen eines Isolationselements für den Aufnahmebereich gemäß Fig. 2;
- Fig. 8: eine weitere schematische Schnittansicht der Form gemäß Fig. 7;
- Fig. 9: eine weitere schematische Schnittansicht der Form gemäß Fig. 7;
- Fig. 10: eine weitere schematische Schnittansicht der Form gemäß Fig. 7;
- Fig. 11: eine schematische Schnittansicht einer weiteren Ausführungsform eines Aufnahmebereichs für das Haushaltsgerät gemäß Fig. 1;
- Fig. 12: eine weitere schematische Schnittansicht des Aufnahmebereichs gemäß Fig. 11;
- Fig. 13: eine schematische Schnittansicht einer weiteren Ausführungsform eines Aufnahmebereichs für das Haushaltsgerät gemäß Fig. 1;
- Fig. 14: eine weitere schematische Schnittansicht des Aufnahmebereichs gemäß Fig. 13; und
- Fig. 15: eine weitere schematische Schnittansicht des Aufnahmebereichs gemäß Fig. 13.

In den Figuren sind gleiche oder funktionsgleiche Elemente mit denselben Bezugszeichen versehen worden, sofern nichts anderes angegeben ist.

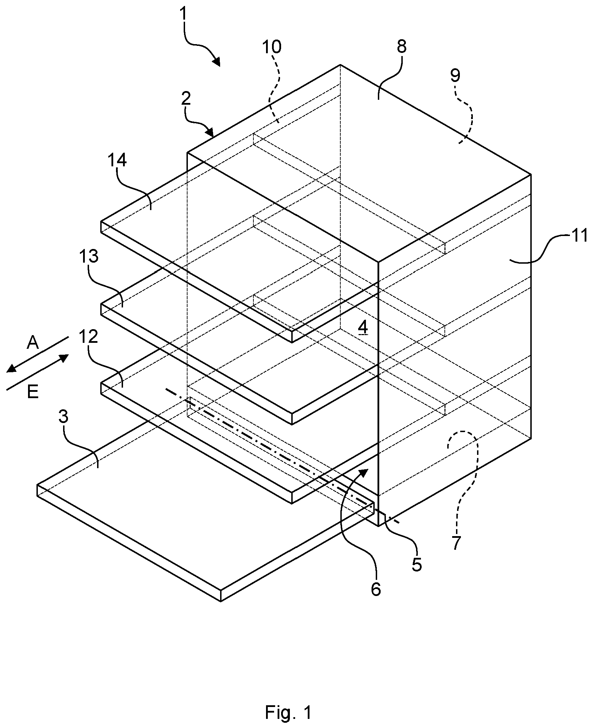

Die Fig. 1 zeigt eine schematische perspektivische Ansicht einer Ausführungsform eines Haushaltsgeräts 1. Das Haushaltsgerät 1 ist insbesondere ein wasserführendes Haushaltsgerät, wie beispielsweise eine Haushaltsgeschirrspülmaschine oder eine Haushaltswaschmaschine. Das Haushaltsgerät 1 kann jedoch auch ein Kühlschrank, ein Herd, ein Backofen oder dergleichen sein. Nachfolgend wird jedoch davon ausgegangen, dass das Haushaltsgerät 1 eine Haushaltsgeschirrspülmaschine ist.

Das Haushaltsgerät 1 weist einen Aufnahmebereich 2 auf, welcher über eine Tür 3, insbesondere wasserdicht, verschließbar ist. Hierzu kann zwischen der Tür 3 und dem Aufnahmebereich 2 eine Dichteinrichtung vorgesehen sein. Der Aufnahmebereich 2 ist vorzugsweise quaderförmig. Der Aufnahmebereich 2 kann ein Spülbehälter sein. Der Aufnahmebereich 2 kann in einem Gehäuse des Haushaltsgeräts 1 angeordnet sein. Der Aufnahmebereich 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Aufnahmebereichs 2 geschlossen oder geöffnet werden. Der Aufnahmebereich 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Der Boden 7 kann alternativ beispielsweise aus einem Kunststoffmaterial gefertigt sein.

Das Haushaltsgerät 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Aufnahmebereich 2 angeordnet. Jede Spülgutaufnahme 12 bis 14 ist wahlweise in den Aufnahmebereich 2 hinein- oder aus diesem herausverlagerbar. Insbesondere ist jede Spülgutaufnahme 12 bis 14 in einer Einschubrichtung E (Pfeil) in den Aufnahmebereich 2 hineinschiebbar oder hineinfahrbar und entgegen der Einschubrichtung E (Pfeil) in einer Auszugsrichtung A (Pfeil) aus dem Aufnahmebereich 2 herausziehbar oder herausfahrbar.

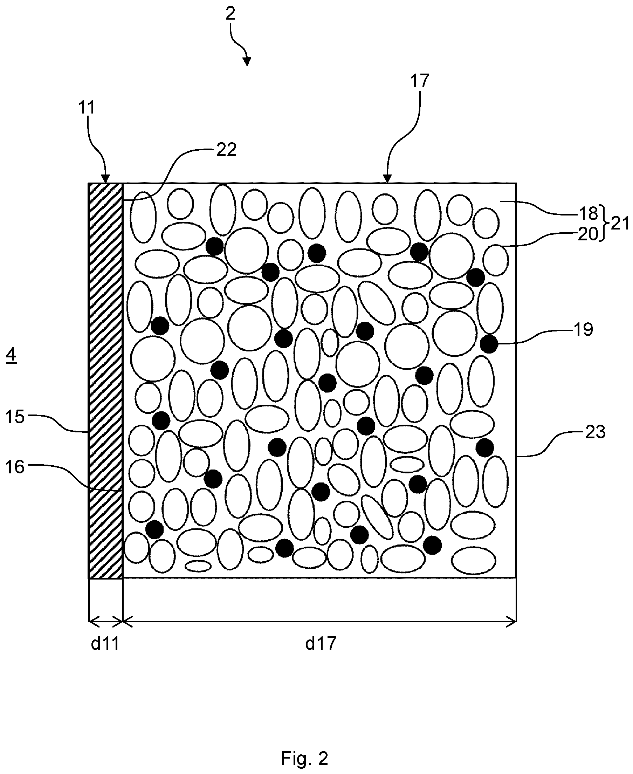

Die Fig. 2 zeigt eine stark vergrößerte schematische Schnittansicht einer Ausführungsform des Aufnahmebereichs 2. Insbesondere ist in der Fig. 2 nur ein Ausschnitt der Seitenwand 11 gezeigt. Die Seitenwand 11 kann, wie zuvor erwähnt, beispielsweise aus einem Edelstahlblech gefertigt sein. Die Seitenwand 11 umfasst eine dem Spülraum 4 zugewandte Innenseite 15 sowie eine dem Spülraum 4 abgewandte Außenseite 16. Die Innenseite 15 und die Außenseite 16 sind parallel zueinander platziert. Die Seitenwand 11 weist eine Dicke d11 auf. Die Dicke d11 kann beispielsweise 0,2 bis 1 mm betragen.

Das Haushaltsgerät 1 umfasst ein an dem Aufnahmebereich 2 angebrachtes Isolationselement 17 zum akustischen Dämmen oder Isolieren des Aufnahmebereichs 2. Das Isolationselement 17 kann auch als Dämmelement bezeichnet werden. Das Isolationselement 17 weist auch thermische Dämmeigenschaften oder thermische Isoliereigenschaften auf. Das Isolationselement 17 kann den Aufnahmebereich 2 einhüllen. Das heißt, das Isolationselement 17 kann an dem Boden 7, an der Decke 8, an der Rückwand 9, an den Seitenwänden 10, 11 und/oder an der Tür 3 vorgesehen sein. Alternativ kann das Isolationselement 17 beispielsweise auch nur an den Seitenwänden 10, 11 oder nur an den Seitenwänden 10, 11 und an der Rückwand 9 vorgesehen sein. Es können mehrere Isolationselemente 17 vorgesehen sein. Beispielsweise kann jeder Seitenwand 10, 11 jeweils ein derartiges Isolationselement 17 zugeordnet sein.

Das Isolationselement 17 ist dem Spülraum 4 abgewandt außenseitig an dem Aufnahmebereich 2 vorgesehen. Insbesondere ist das Isolationselement 17, wie die Fig. 2 zeigt, an der Außenseite 16 der Seitenwand 11 angebracht. Das Isolationselement 17 kann mit der Außenseite 16 beispielsweise verschmolzen oder verklebt sein. Das Isolationselement 17 kann auch nur auf die Außenseite 16 angepresst sein. Das Isolationselement 17 weist eine Dicke d17 von bevorzugt mehr als 2 mm, weiter bevorzugt von mehr als 10 mm, weiter bevorzugt von mehr als 15 mm, auf. Damit ist die Dicke d17 bevorzugt ein Vielfaches größer als die Dicke d11.

Das Isolationselement 17 umfasst ein aufgeschäumtes Matrixmaterial 18, in welchem Partikel 19 eingebettet sind. "Aufgeschäumt" bedeutet vorliegend, dass in dem Matrixmaterial 18 eine Vielzahl an Zellen oder Poren 20 eingeschlossen ist. Die Poren 20 können beispielsweise luftgefüllt sein. Die Poren 20 können jede beliebige Geometrie aufweisen. Beispielsweise sind die Poren 20 kugelförmig oder ellipsoidförmig. Das Matrixmaterial 18 und die Poren 20 bilden zusammen einen viskoelastischen Polyurethanschaum 21 (PUR-Schaum). Ein viskoelastischer Polyurethan kann durch eine Mischung aus mehreren Rohkomponenten, nämlich einem Isocyanat und einem Polyol, hergestellt werden. Ferner kann die Mischung auch ein Treibmittel enthalten. Das Isocyanat und das Polyol sind jeweils Flüssigkeiten. Ist in der Mischung des Isocyanats und des Polyols das Treibmittel vorhanden, welches bei der Reaktion des Isocyanats mit dem Polyol zu einer Ausgasung führt, wird das Matrixmaterial 18 im Zuge der chemischen Reaktion aufgeschäumt, wodurch die Poren 20 in dem Matrixmaterial 18 entstehen und sich der viskoelastische Polyurethanschaum 21 bildet. Das Isolationselement 17 umfasst eine Oberfläche 22, welche der Außenseite 16 zugewandt ist, und eine Oberfläche 23, welche der Außenseite 16 abgewandt ist.

Die Poren 20 sind vorzugsweise geschlossen. Das heißt, die Poren 20 sind untereinander nicht in Verbindung. Die Poren 20 können jedoch auch offen oder offenporig sein. In diesem Fall sind die Poren 20 untereinander in Verbindung. Das Matrixmaterial 18 und somit der viskoelastische Polyurethanschaum 21 kann mit den unterschiedlichsten Materialeigenschaften ausgestattet werden. Die Materialeigenschaften hängen im Wesentlichen von den chemischen Inhaltsstoffen der Rohkomponenten ab. Der Polyurethanschaum 21 weist viskoelastische Eigenschaften auf. Als "Viskoelastizität" wird vorliegend ein teilweise elastisches und teilweise viskoses Materialverhalten bezeichnet. Viskoelastische Materialien vereinigen also die Merkmale von Festkörpern und Flüssigkeiten in sich.

Der viskoelastische Polyurethanschaum 21 weist eine Wärmeleitfähigkeit zwischen 20 und 80 mW/(m*K), bevorzugt zwischen 40 und 60 mW/(m*K), weiter bevorzugt zwischen 50 und 60 mW/(m*K), auf. Der viskoelastische Polyurethanschaum 21 kann eine Dichte von weniger als 300 kg/m³, bevorzugt von weniger als 250 kg/m³, weiter bevorzugt von weniger als 200 kg/m³, aufweisen.

Das Isolationselement 17 ist vorzugsweise direkt an den Aufnahmebereich 2, insbesondere an die Seitenwand 11, angeschäumt. Hierzu können dem Matrixmaterial 18 chemische Zusätze beigemischt werden, welche ein Lösen des Isolationselements 17 von dem Aufnahmebereich 2 verhindern. Weiterhin kann die Außenseite 16 der Seitenwand 11 alternativ oder zusätzlich vorbehandelt, beispielsweise aufgeraut, werden, so dass sich die Verbindung zwischen dem Isolationselement 17 und der Seitenwand 11 nicht lösen kann.

Durch das vollflächige Aufbringen des Isolationselements 17 auf den Aufnahmebereich 2 wird eine gute akustische Isolation des Aufnahmebereichs 2 sichergestellt. Ein Vorteil bei einer kompletten Umschäumung des Aufnahmebereichs 2 mit dem Isolationselement 17 ist, dass vorhandene Spalte lückenlos abgeschlossen werden, wodurch nochmals eine verbesserte akustische Isolation gewährleistet ist.

Die Partikel 19 sind gleichmäßig in dem Matrixmaterial 18 verteilt angeordnet. Ferner können die Partikel 19 als Keimstellen für die Poren 20 fungieren. Die Partikel 19 werden vorzugsweise in die zu vermischenden Rohkomponenten des Matrixmaterials 18 eingemischt. Als Partikel 19 kommen beispielsweise Metalle, Gesteine oder sonstige anorganische Materialien infrage. Auch organische Materialien, wie etwa Kunststoffe, kommen infrage, wenn die Dichte und der E-Modul der Partikel 19 größer sind als die des Matrixmaterials 18.

Besonders bevorzugt sind die Partikel 19 Graphitpartikel, insbesondere Blähgraphitpartikel. Die Verwendung von Blähgraphitpartikeln hat den Vorteil, dass die Partikel 19 in diesem Fall intumeszente Eigenschaften aufweisen. Unter "Intumeszenz" ist vorliegend eine Ausdehnung oder Anschwellung, also eine Volumenzunahme der Partikel 19 ohne eine chemische Umwandlung derselben, bei einer Hitzeeinwirkung zu verstehen. Das heißt, bei einer Hitzeeinwirkung auf das Isolationselement 17 kann sich das Matrixmaterial 18 zersetzen, während sich die als Blähgraphitpartikel ausgebildeten Partikel 19 ausdehnen oder anschwellen und somit einen als Hitzebremse fungierenden Kohlenstoffschaum auf oder an dem Aufnahmebereich 2 bilden.

Wie zuvor erwähnt, weisen die Partikel 19 eine größere Dichte als der viskoelastische Polyurethanschaum 21 und als das Matrixmaterial 18 auf. Die Partikel 19 können eine Dichte zwischen 500 und 8.000 kg/m³, insbesondere von 2.200 kg/m³, aufweisen. Wie zuvor erwähnt, ist auch der E-Modul der Partikel 19 größer als der E-Modul des Matrixmaterials 18. Die Partikel 19 weisen bevorzugt eine Partikelgröße von weniger als 500 µm auf. Die Partikel 19 liegen als Pulver vor und sind aufgrund ihrer Größe ausreichend klein, um sich gleichmäßig in dem Matrixmaterial 18 zu verteilen. Die Größe der Partikel 19 ist im Wesentlichen kleiner als 500 µm. Das heißt, es sind auch Partikel 19 zulässig, welche größer als 500 µm sind, jedoch ist es vorteilhaft, wenn 60 % der Partikel 19 kleiner als 500 µm sind. Vorzugsweise sind 80 %, insbesondere 90 %, der Partikel 19 kleiner als 500 µm. Durch die Beimischung der Partikel 19 in das Matrixmaterial 18 verändert sich die Porenstruktur des viskoelastischen Polyurethanschaums 21. Das heißt, die Größe, die Anzahl und/oder die Geometrie der Poren 20 in dem Isolationselement 17.

Zum Herstellen des Isolationselements 17 werden die Partikel 19 einer oder mehreren der flüssigen Rohkomponenten des Matrixmaterials 18 zugefügt und in der Mischung der Rohkomponenten gleichmäßig verteilt. Es ist auch möglich, die Partikel 19 den bereits vermischten Rohkomponenten hinzuzufügen, während sie noch flüssig sind. Ferner können unterschiedliche Arten von Partikeln 19 aus unterschiedlichen Stoffen kombiniert werden. Auch können diese Partikel 19 in ihrer Größenverteilung und physikalischen Eigenschaften Unterschiede aufweisen. Werden gleichartige oder auch verschiedene Partikel 19 in Größe, Art und Menge zugesetzt, kann mit ein und denselben Rohkomponenten eine große Bandbreite an unterschiedlich optimierten Isolationselementen 17 hergestellt werden. Dies kann dazu genützt werden, um auf einer Fertigungsanlage Isolationselemente 17 für verschiedene Anwendungszwecke herzustellen.

Das Isolationselement 17 weist bei 40 °C und bei einer Frequenz von 100 bis 800 Hz einen Verlustfaktor von größer als 0,2, bevorzugt von größer als 0,35, weiter bevorzugt von größer als 0,5, auf. Unter dem "Verlustfaktor" ist vorliegend bei physikalischen Schwingungen unterschiedlicher Natur das Verhältnis des verlustbehafteten Imaginärteils zum verlustfreien Realteil einer komplexen Größe zu verstehen. Durch das Hinzufügen der Partikel 19 zu dem Matrixmaterial 18 kann der Verlustfaktor des Isolationselements 17 beeinflusst werden. Vorteilhafterweise kann dieser Zusammenhang genutzt werden, wenn dadurch eine Steigerung des Verlustfaktors über den gesamten Frequenz- und Temperaturbereich stattfindet oder auch eine Steigerung in dem für den Einzelfall relevanten Frequenz- und Temperaturbereich möglich ist.

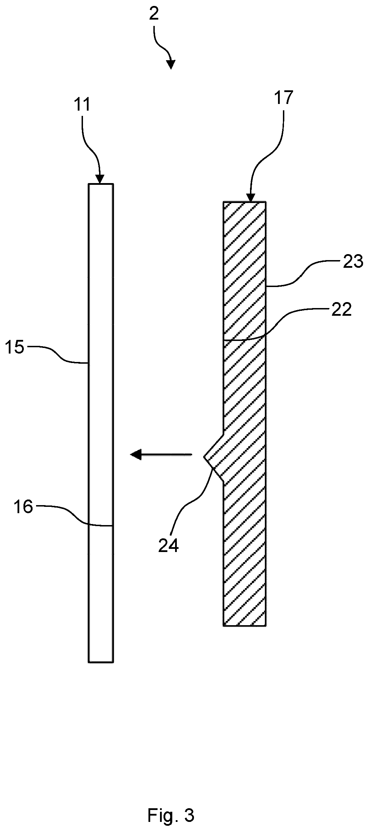

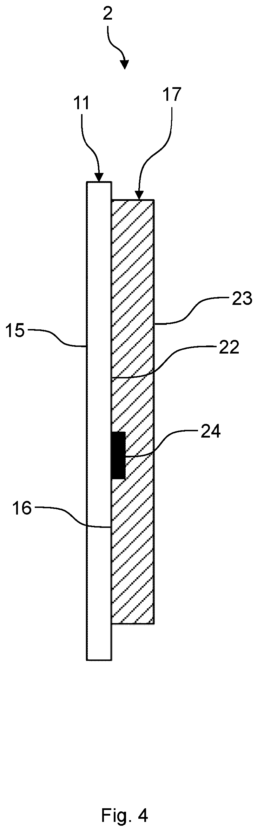

Die Fig. 3 und die Fig. 4 zeigen jeweils eine schematische Teilschnittansicht einer weiteren Ausführungsform eines Aufnahmebereichs 2. Insbesondere zeigen die Fig. 3 und 4 jeweils nur die Seitenwand 11 des Aufnahmebereichs 2. Wie zuvor erwähnt, umfasst das Isolationselement 17 die Oberfläche 22, welche der Außenseite 16 der Seitenwand 11 zugeordnet ist und an dieser anliegt, sowie die der Oberfläche 22 abgewandte Oberfläche 23. An der Oberfläche 22 ist eine elastisch verformbare Dichtlippe 24 vorgesehen. Die Dichtlippe 24 ist aus dem viskoelastischen Polyurethanschaum 21 geformt. Wie die Fig. 4 zeigt, wird das Isolationselement 27 derart gegen die Seitenwand 11, insbesondere gegen die Außenseite 16, gepresst, dass sich die Dichtlippe 24 elastisch verformt. Die Dichtlippe 24 wird also verpresst oder komprimiert. Hierdurch wird das Isolationselement 17 gegenüber dem Aufnahmebereich 2, insbesondere gegenüber der Seitenwand 11, fluiddicht abgedichtet. Auch bei einem Schrumpf des viskoelastischen Polyurethanschaums 21 stellt die Dichtlippe 24 so viel Material zur Verfügung, dass die Dichtlippe 24 gegenüber dem Aufnahmebereich 2 fluiddicht abdichtet.

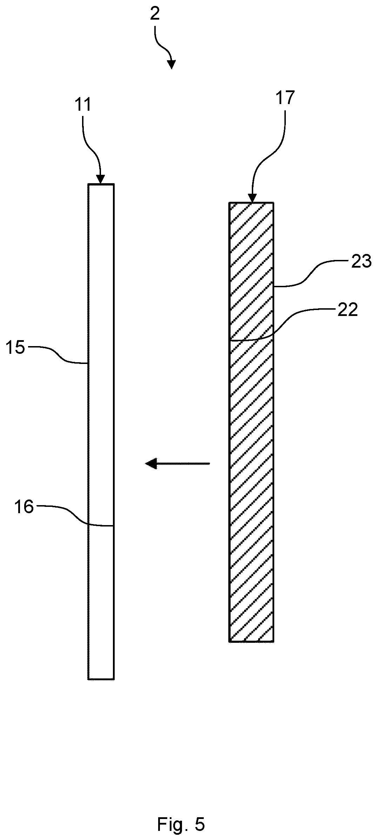

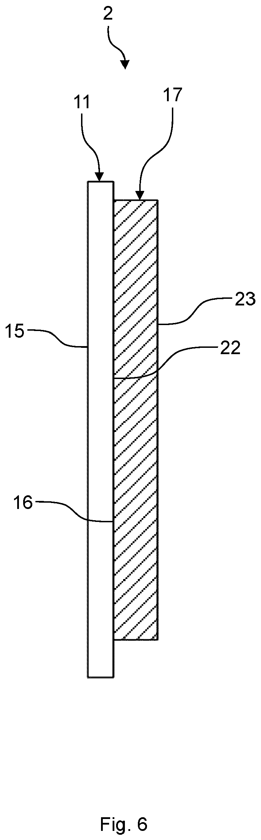

Die Fig. 5 und die Fig. 6 zeigen jeweils eine schematische Teilschnittansicht einer weiteren Ausführungsform eines Aufnahmebereichs 2. Auch hier ist in den Fig. 5 und 6 nur die Seitenwand 11 gezeigt. Bei dieser Ausführungsform des Aufnahmebereichs 2 ist im Gegensatz zu der Ausführungsform des Aufnahmebereichs 2 gemäß der Fig. 3 und der Fig. 4 an dem Isolationselement 17 keine Dichtlippe 24 vorgesehen. Vielmehr liegt das Isolationselement 17 mit seiner Oberfläche 22 flächig auf der Außenseite 16 der Seitenwand 11 auf und dichtet fluiddicht gegenüber dieser ab.

Mit Hilfe des Isolationselements 17 kann die thermische Isolation des Aufnahmebereichs 2 verbessert werden und/oder die Schallabstrahlung kann reduziert werden. Dabei ist das Isolationselement 17, wie zuvor erläutert, derart gestaltet, dass in dieses die Funktion einer fluiddichten Abdichtung gegenüber Wasser, insbesondere gegenüber Wasserdampf, integriert ist. Dies kann beispielsweise gemäß der Fig. 5 und der Fig. 6 mit einem vollflächigen Formschluss geschehen oder durch die in der Fig. 3 und der Fig. 4 gezeigte Dichtlippe 24 unterstützt werden. Hierdurch erhöht sich der Flächendruck im Bereich der Dichtlippe 24, und bei einem eventuell über die Lebensdauer des Haushaltsgeräts 1 auftretenden Schrumpf des viskoelastischen Polyurethanschaums 21 kann eine Materialreserve vorgehalten werden.

Vorzugsweise weist der viskoelastische Polyurethanschaum 21 hydrophile Eigenschaften auf. Dies kann vorteilhafterweise genutzt werden, um den Transport von Wasserdampf, beispielsweise während eines Spülzyklus, zu bremsen. Nach dem Ende des Spülzyklus kann der viskoelastische Polyurethanschaum 21 die aus dem Wasserdampf aufgenommene Feuchtigkeit wieder in kontrollierter Weise an die Umgebung abgeben, ohne dass es zu Komplikationen in dem Haushaltsgerät 1 kommt. Für den Fall, dass der viskoelastische Polyurethanschaum 21 hydrophile Eigenschaften aufweist, ist dieser insbesondere offenporig. Dadurch kann der viskoelastische Polyurethanschaum 21 besonders viel Feuchtigkeit beziehungsweise Wasserdampf aufnehmen.

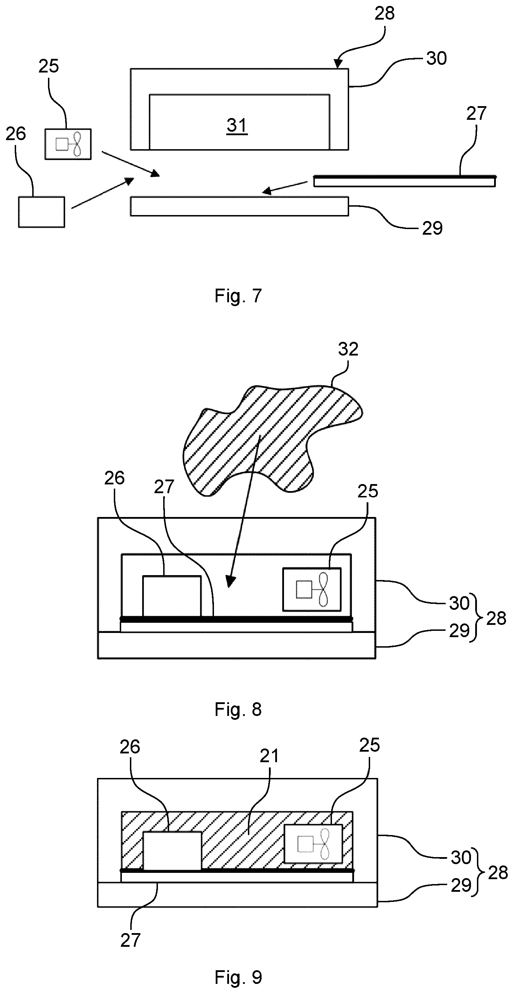

Die Fig. 7 bis Fig. 12 zeigen schrittweise die Herstellung einer weiteren Ausführungsform eines Isolationselements 17 und die Montage desselben an dem Aufnahmebereich 2. Hierbei wird der viskoelastische Polyurethanschaum 21 genutzt, um Bauteile 25, 26 zu fixieren und zumindest teilweise in sich einzuschließen. Die Bauteile 25, 26 können aktive Bauteile oder passive Bauteile sein. Ein Beispiel für ein aktives Bauteil ist ein Lüfter. Ein Beispiel für ein passives Bauteil kann ein Kabel sein. Die Bauteile 25, 26 können insbesondere wasserführende Bauteile, luftführende Bauteile, Wassertaschen, Kunststoffteile zur Krafteinleitung in den Aufnahmebereich 2, einen Lüfter, einen Motor, eine Feder, ein Seil, elektrische Leitungen oder Komponenten, ein Vlies, eine Matte, ein Kunststoffbauteil, Schaumbauteile, Bitumen oder dergleichen umfassen.

Zum Herstellen des Isolationselements 17 werden zunächst ein Versteifungselement 27, beispielsweise eine Bitumenmatte, und die Bauteile 25, 26 in eine Form 28, insbesondere eine Gussform oder Gießform, welche ein Formunterteil 29 und ein Formoberteil 30 aufweist, eingelegt (Fig. 7). Nach dem Einlegen des Versteifungselements 27 sowie der Bauteile 25, 26 in eine Kavität 31 der Form 28 wird eine Mischung 32 der Rohkomponenten des viskoelastischen Polyurethanschaums 21 in die Form 28 eingebracht (Fig. 8). Die Mischung 32 kann dann unter Umgebungsdruck oder unter Vakuum chemisch reagieren und dabei aufschäumen und die Kavität 31 vollständig mit dem viskoelastischen Polyurethanschaum 21 ausfüllen (Fig. 9). Dabei umgibt der viskoelastische Polyurethanschaum 21 die Bauteile 25, 26 entweder vollständig oder, wie im Fall des Bauteils 26, zumindest abschnittsweise. Das Bauteil 25 kann bei dem Umschäumen desselben mit der Mischung 32 in der Kavität 31 beispielsweise mit Hilfe von Stäben oder Drähten in Position gehalten werden. Das Bauteil 26 kann auf dem Versteifungselement 27 oder auf dem Formunterteil 29 zur Positionierung abgelegt werden.

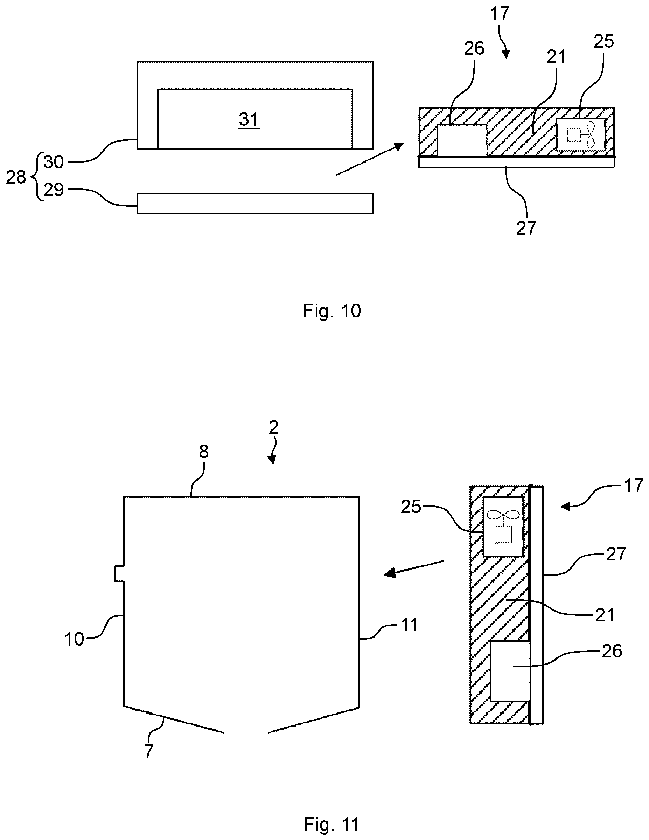

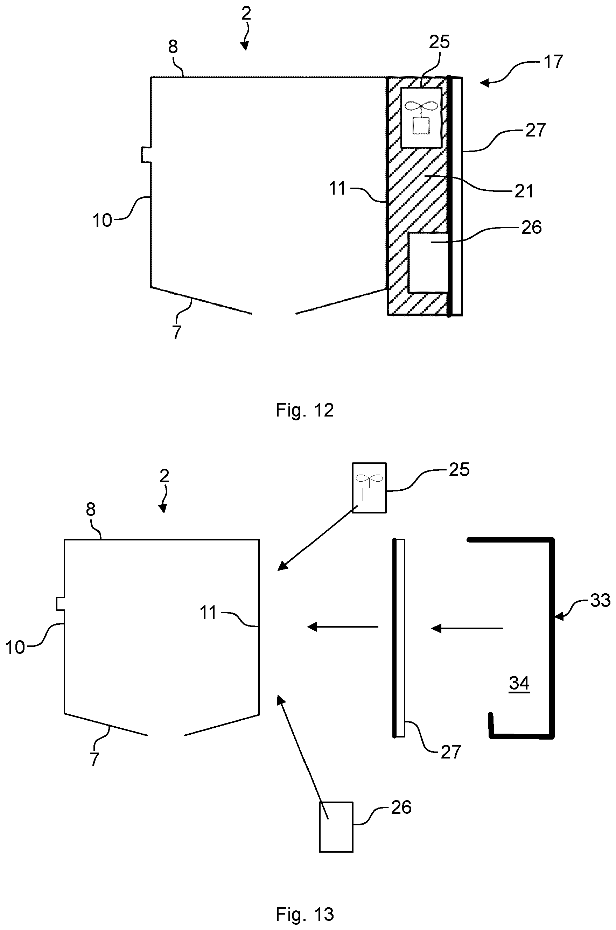

Nach dem vollständigen Aushärten und/oder Vernetzen des viskoelastischen Polyurethanschaums 21 wird die Form 28, wie in der Fig. 10 gezeigt, geöffnet und das Isolationselement 17 wird entformt. Anschließend wird das Isolationselement 17, wie in der Fig. 11 und der Fig. 12 gezeigt, außenseitig an dem Aufnahmebereich 2 angebracht.

Hierzu wird das Isolationselement 17 beispielsweise gegen den Aufnahmebereich 2 gepresst, derart, dass eine fluiddichte Verbindung zwischen dem Isolationselement und dem Aufnahmebereich 2 hergestellt wird.

Um die Bauteile 25, 26 fixieren zu können, können die Eigenschaften des viskoelastischen Polyurethanschaums 21 als Kleber dazu genutzt werden, die Bauteile 25, 26 an Ort und Stelle zu halten, ohne zusätzliche Maßnahmen zu treffen. Handelt es sich bei den Bauteilen 25, 26 um aktive Komponenten, wie beispielsweise Lüfter, so sind diese durch die Verwendung des viskoelastischen Polyurethanschaums 21 zugleich auch schwingungsgedämpft. Dadurch können ferner andere Verbindungselemente, wie Schrauben, Clips oder dergleichen, ersetzt werden. Vor allem großflächige Bauteile eignen sich in besonderer Weise dazu. Durch die große Fläche ergibt sich eine hohe Haltekraft der Klebeverbindung zum Grundaufbau des Aufnahmebereichs 2. Wird der viskoelastische Polyurethanschaum 21 großvolumig und als Verbindungselement zwischen verschiedenen Komponenten in dem Haushaltsgerät 1 genutzt, kann dies für den Transportfall Vorteile bieten. Insbesondere bei kalten Temperaturen erhöht sich die Steifigkeit des viskoelastischen Polyurethanschaums 21 und bietet gute Eigenschaften hinsichtlich Schockabsorption.

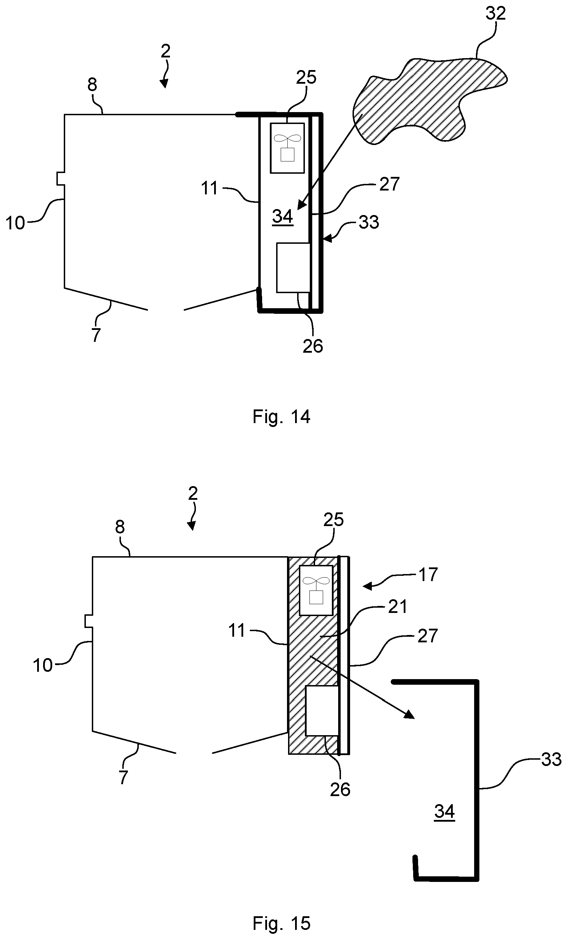

Die Fig. 13 bis Fig. 15 zeigen eine alternative Vorgehensweise zum Herstellen des Isolationselements 17. Hierzu werden an dem Aufnahmebereich 2, insbesondere an der Seitenwand 11, mit Hilfe einer Form 33, welche direkt an dem Aufnahmebereich 2 befestigt werden kann, das optionale Versteifungselement 27 sowie die Bauteile 25, 26 angebracht. Die Form 33 weist eine Kavität 34 auf, welche nach dem Anbringen der Form 33 an dem Aufnahmebereich 2 mit der zuvor erwähnten Mischung 32 der Rohkomponenten des viskoelastischen Polyurethanschaums 21 befüllt wird (Fig. 14). Anschließend härtet und/oder vernetzt der viskoelastische Polyurethanschaum 21, und die Form 33 kann, wie in der Fig. 15 gezeigt, wieder von dem Aufnahmebereich 2 entfernt und erneut verwendet werden.

Durch die Integration der Funktion der Dichtung gegenüber Dampf mit Hilfe der Dichtlippe 24 kann eine Einsparung weiterer Bauteile mit Hilfe der Verwendung des Isolationselements 17 erzielt werden. Durch die vorteilhafte Nutzung der hydrophilen Eigenschaften des viskoelastischen Polyurethanschaums 21 kann eine gezielte Aufnahme von Wasserdampf und spätere Abgabe von Luftfeuchtigkeit an die Umgebung gewährleistet werden. Durch die Integration der Bauteile 25, 26 in das Isolationselement 17 kann auf eine zusätzliche Fixierung der Bauteile 25, 26 verzichtet werden. Zudem sind diese dämpfend in dem viskoelastischen Polyurethanschaum 21 gelagert.

Obwohl die vorliegende Erfindung anhand von Ausführungsbeispielen beschrieben wurde, ist sie vielfältig modifizierbar.

### Verwendete Bezugszeichen

- 1: Haushaltsgerät
- 2: Aufnahmebereich
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Innenseite
- 16: Außenseite
- 17: Isolationselement
- 18: Matrixmaterial
- 19: Partikel
- 20: Pore
- 21: Viskoelastischer Polyurethanschaum
- 22: Oberfläche
- 23: Oberfläche
- 24: Dichtlippe
- 25: Bauteil
- 26: Bauteile
- 27: Versteifungselement
- 28: Form
- 29: Formunterteil
- 30: Formoberteil
- 31: Kavität
- 32: Mischung
- 33: Form
- 34: Kavität

- A: Auszugsrichtung (Pfeil)
- d11: Dicke
- d17: Dicke
- E: Einschubrichtung (Pfeil)

## Patentansprüche

1. Haushaltsgerät (1), insbesondere wasserführendes Haushaltsgerät, mit einem Aufnahmebereich (2) und einem an dem Aufnahmebereich (2) angebrachten Isolationselement (17) zum akustischen und/oder thermischen Isolieren des Aufnahmebereichs (2),
wobei:
- das Isolationselement (17) aus einem viskoelastischen Polyurethanschaum (21) gefertigt ist,
- der viskoelastische Polyurethanschaum (21) hydrophil ist und
- das Isolationselement (17) derart gegen den Aufnahmebereich (2) gepresst ist, dass das Isolationselement (17) gegenüber dem Aufnahmebereich (2) fluiddicht abgedichtet ist.

2. Haushaltsgerät (1) nach Anspruch 1, **dadurch gekennzeichnet, dass** der viskoelastische Polyurethanschaum (21) bei 40 °C und bei einer Frequenz von 100 bis 800 Hz einen Verlustfaktor von größer als 0,2, bevorzugt von größer als 0,35, weiter bevorzugt von größer als 0,5, aufweist.

3. Haushaltsgerät (1) nach Anspruch 1 oder 2, **dadurch gekennzeichnet, dass** der viskoelastische Polyurethanschaum (21) eine Wärmeleitfähigkeit zwischen 20 und 80 mW/(m*K), bevorzugt zwischen 40 und 60 mW/(m*K), weiter bevorzugt zwischen 50 und 60 mW/(m*K), aufweist.

4. Haushaltsgerät (1) nach Anspruch 1, 2 oder 3, **dadurch gekennzeichnet, dass** der viskoelastische Polyurethanschaum (21) eine Dichte von weniger als 300 kg/m³, bevorzugt von weniger als 250 kg/m³, weiter bevorzugt von weniger als 200 kg/m³, aufweist.

5. Haushaltsgerät (1) nach einem der vorhergehenden Ansprüche, **dadurch gekennzeichnet, dass** das Isolationselement (17) eine elastisch verformbare Dichtlippe (24) aufweist, welche gegen den Aufnahmebereich (2) gepresst ist, um das Isolationselement (17) gegenüber dem Aufnahmebereich (2) fluiddicht abzudichten.

6. Haushaltsgerät (1) nach einem der vorhergehenden Ansprüche, **dadurch gekennzeichnet, dass** der viskoelastische Polyurethanschaum (21) während eines Programmablaufs des Haushaltsgeräts (1) Wasser aufnimmt und das Wasser gegen Ende des Programmablaufs wieder abgibt.

7. Haushaltsgerät (1) nach einem der vorhergehenden Ansprüche, **dadurch gekennzeichnet, dass** in den viskoelastischen Polyurethanschaum (21) Partikel (19) eingebettet sind.

8. Haushaltsgerät (1) nach einem der vorhergehenden Ansprüche, **dadurch gekennzeichnet, dass** in dem Isolationselement (17) Bauteile (25, 26) des Haushaltsgeräts (1) angeordnet sind.

9. Haushaltsgerät (1) nach Anspruch 8, **dadurch gekennzeichnet, dass** der viskoelastische Polyurethanschaum (21) von den Bauteilen (25, 26) erzeugte Schwingungen dämpft.

## Claims

1. Household appliance (1), in particular water-guiding household appliance, with a receiving region (2) and an insulation element (17) attached to the receiving region (2) for the acoustic and/or thermal insulation of the receiving region (2), wherein
- the insulation element (17) is manufactured from a viscoelastic polyurethane foam (21),
- the viscoelastic polyurethane foam (21) is hydrophilic and
- the insulation element (17) is pressed against the receiving region (2) in such a manner that the insulation element (17) is sealed off in relation to the receiving region (2) in a fluid-tight manner.

2. Household appliance (1) according to claim 1, **characterised in that** at 40 °C and at a frequency of 100 to 800 Hz, the viscoelastic polyurethane foam (21) has a loss factor of more than 0.2, preferably of more than 0.35, further preferably of more than 0.5.

3. Household appliance (1) according to claim 1 or 2, **characterised in that** the viscoelastic polyurethane foam (21) has a thermal conductivity between 20 and 80 mW(m*K), preferably between 40 and 60 mW(m*K), further preferably between 50 and 60 mW(m*K).

4. Household appliance (1) according to claim 1, 2 or 3, **characterised in that** the viscoelastic polyurethane foam (21) has a density of less than 300 kg/m³, preferably of less than 250 kg/m³, further preferably of less than 200 kg/m³.

5. Household appliance (1) according to one of the preceding claims, **characterised in that** the insulation element (17) has an elastically deformable sealing lip (24), which is pressed against the receiving region (2), in order to seal off the insulation element (17) in relation to the receiving region (2) in a fluid-tight manner.

6. Household appliance (1) according to one of the preceding claims, **characterised in that** the viscoelastic polyurethane foam (21) absorbs water during a program sequence of the household appliance (1) and releases the water toward the end of the program sequence.

7. Household appliance (1) according to one of the preceding claims, **characterised in that** particles (19) are embedded into the viscoelastic polyurethane foam (21).

8. Household appliance (1) according to one of the preceding claims, **characterised in that** structural parts (25, 26) of the household appliance (1) are arranged in the insulation element (17).

9. Household appliance (1) according to claim 8, **characterised in that** the viscoelastic polyurethane foam (21) damps vibrations generated by the structural parts (25, 26).

## Revendications

1. Appareil électroménager (1), en particulier appareil électroménager à circulation d'eau, comprenant une zone de réception (2) et un élément isolant (17) joint à la zone de réception (2) à des fins d'isolation acoustique et/ou thermique de la zone de réception (2),
dans lequel :
- l'élément isolant (17) est fabriqué en mousse de polyuréthane viscoélastique (21),
- la mousse de polyuréthane viscoélastique (21) est hydrophile et
- l'élément isolant (17) est comprimé contre la zone de réception (2) de sorte que l'élément isolant (17) en face de la zone de réception (2) est rendu étanche contre les fluides.

2. Appareil électroménager (1) selon la revendication 1, **caractérisé en ce que** la mousse de polyuréthane viscoélastique (21) présente à 40°C et à une fréquence de 100 à 800 Hz, un facteur de perte supérieur à 0,2, de préférence supérieur à 0,35, de manière plus préférée supérieur à 0,5.

3. Appareil électroménager (1) selon la revendication 1 ou 2, **caractérisé en ce que** la mousse de polyuréthane viscoélastique (21) a une conductivité thermique entre 20 et 80 mW/(m*K), de préférence entre 40 et 60 mW/(m*K), de manière plus préférée comprise entre 50 et 60 mW/(m*K).

4. Appareil électroménager (1) selon la revendication 1, 2 ou 3, **caractérisé en ce que** la mousse de polyuréthane viscoélastique (21) a une densité inférieure à 300 kg/m³, de préférence inférieure à 250 kg/m³, de manière plus préférée inférieure à 200 kg/m³.

5. Appareil électroménager (1) selon l'une des revendications précédentes, **caractérisé en ce que** l'élément isolant (17) a une lèvre d'étanchéité élastiquement déformable (24), laquelle est comprimée contre la zone de réception (2) et ce, pour rendre l'élément isolant (17) en face de la zone de réception (2) étanche contre les fluides.

6. Appareil électroménager (1) selon l'une des revendications précédentes, **caractérisé en ce que** la mousse de polyuréthane viscoélastique (21) absorbe de l'eau pendant le déroulement d'un programme de l'appareil électroménager (1) et rend cette eau vers la fin du déroulement du programme.

7. Appareil électroménager (1) selon l'une des revendications précédentes, **caractérisé en ce que** des particules (19) sont incorporées dans la mousse de polyuréthane viscoélastique (21).

8. Appareil électroménager (1) selon l'une des revendications précédentes, **caractérisé en ce que** des composants (25, 26) de l'appareil électroménager (1) sont disposés dans l'élément isolant (17).

9. Appareil électroménager (1) selon la revendication 8, **caractérisé en ce que** la mousse de polyuréthane viscoélastique (21) atténue les vibrations produites par les composants (25, 26).
